# EUROPEAN PATENT SPECIFICATION

(11) **EP 0 628 708 B1**
(45) Date of publication and mention of the grant of the patent: **04.12.1996**
(21) Application number: 94201979.5
(22) Date of filing: 22.07.1991
(51) Int. Cl.: F02B 75/22

(54) **A V type piston engine**
Kolbenmaschine mit V-förmig aufgestellten Zylindern
Moteur à pistons avec cylindres rangés en V

(30) Priority: 07.08.1990 GB 9017261
(43) Date of publication of application: 14.12.1994
(62) Divisional of application: 91306632.0
(73) Proprietor: ROVER GROUP LIMITED, Warwick CV34 6RG (GB); KIA MOTORS CORPORATION, Kurogu, Seoul (KR)
(72) Inventor: Benton, David George, Redditch, Worcestershire B98 8RL (GB)
(74) Representative: Farrow, Robert Michael

(56) References cited:
- DE-A- 4 025 927
- DE-B- 1 027 009
- US-A- 2 344 275
- US-A- 3 116 724
- US-A- 4 644 916

## Description

The invention relates to V type piston engines. Particularly it relates to V-type engines for use in a series as described and claimed in application number 91306632.0 (EP-A-0470721) from which this application is divided. Such a series includes a V6 type and a V8 type which are generally well known as motor vehicle power units.

The V8 type of engine commonly has two banks of four cylinders with the banks at 90 degrees to each other. It uses a crankshaft having four crank throws and four crankpins so that the big end bearing of the connecting rod of each cylinder in one bank and the big end bearing of the connecting rod of the opposite cylinder in the other bank are journalled side by side on a common crankpin. The crankpin is of uniform diameter and axis and there is no substantial separation between adjacent side faces of the big end bearings. The cylinders of one bank are offset relative to the crankpin axis from those of the other bank by an amount equivalent to the axial distance between the side faces of one big end bearing, this being called the bank offset.

The V6 type of engine commonly uses a crankshaft having three crank throws and three crankpins. Again, the big end bearing of the connecting rod of each cylinder in one bank and the big end bearing of the connecting rod of the opposite cylinder in the other bank are journalled side by side on a common crankpin. However, if the crankpin is of uniform diameter and axis and there is no substantial separation between adjacent side faces of the big end bearings then the cylinder banks have to be arranged at 60 degrees to each other if engine firing intervals are to be even.

There is relatively little opportunity to exploit common components or use common machining facilities with a 90 degree V8 and a 60 degree V6. A 90 degree V6 can be designed and many are in use. However, to give even firing intervals and acceptable low speed refinement the common crankpin has to have offset axes. To maintain an adequate cross-sectional area along the crankpin and avoid high stress concentrations the journal areas on the common crankpin are separated by an integral collar. In existing designs this collar increases the bank offset so that this amounts to the axial thickness of the collar plus the axial distance between the sides of the big end bearing. Thus whilst there can be some use of common components between a 90 degree V8 and a 90 degree V6, there is a different bank offset which makes it difficult to machine and assemble V8 and V6 engines on the same production facility.

It is an object of the invention to provide an engine which is suitable for a series of engines which include V8 and V6 types and which have an identical bank offset.

According to the invention there is provided a piston engine having an engine block comprising two banks of two or more cylinders arranged in V formation, a crankshaft journalled in the engine block and having two or more crankpins, pistons, each guided for reciprocal movement in a respective cylinder bore, and connecting rods, each having a small end bearing at one end connected to a respective piston and a big end bearing at the other end, the big end bearing of the connecting rod of each cylinder in one bank and the big end bearing of the connecting rod of the opposite cylinder in the other bank being journalled side by side with axial separation of the adjacent side faces of the respective big end bearings on a common crankpin formed with offset axes, the axes of the cylinders of one bank being offset, relative to the crankshaft axis, from the axes of the cylinders of the other bank by an amount called the bank offset, the axis of each cylinder being offset relative to the crankshaft axis from the axial centre of the respective big end bearing by an amount called the connecting rod offset and arranged so that the bank offset is less that the distance between the axial centres of the big end bearings on the respective crankpin.

Connecting rod offsets are not in themselves new. Their previous use has been in in-line type engines where the axial spacing of the crankpins has conflicted with the requirement for relatively uniform spacing of the cylinder axes. Preferably the magnitude of the connecting rod offset is one quarter of the axial distance separating adjacent side faces of the big end bearings on each crankpin.

The invention will now be described by way of example and with reference to the accompanying drawings, of which:
Fig 1 is a simplified cross-section of a V8 type engine of known type;
Fig 2 is a diagram showing the arrangement of crankshaft, pistons and connecting rods of a V8 type engine;
Fig 3 is a scrap-section showing one crankpin of the crankshaft of a V8 engine with the connecting rod and piston of one cylinder and part of the connecting rod of the opposite cylinder in the other bank;
Fig 4 is a scrap-section similar to Fig 3, less the piston and part of the connecting rod and showing the bank offset of a V8 engine;
Fig 5 is a scrap-section similar to Fig 4 but showing one crankpin of the crankshaft of a V6 engine;
Fig 6 is a cross-section on the line VI - VI in Fig 5, omitting the connecting rods;
Fig 7 is a scrap-section similar to Fig 4 but showing part of a V8 engine for use in a series according to the invention described and claimed in application no. 91306632.0; and
Fig 8 is a scrap-section similar to Fig 5 but showing part of a V6 engine according to the present invention.

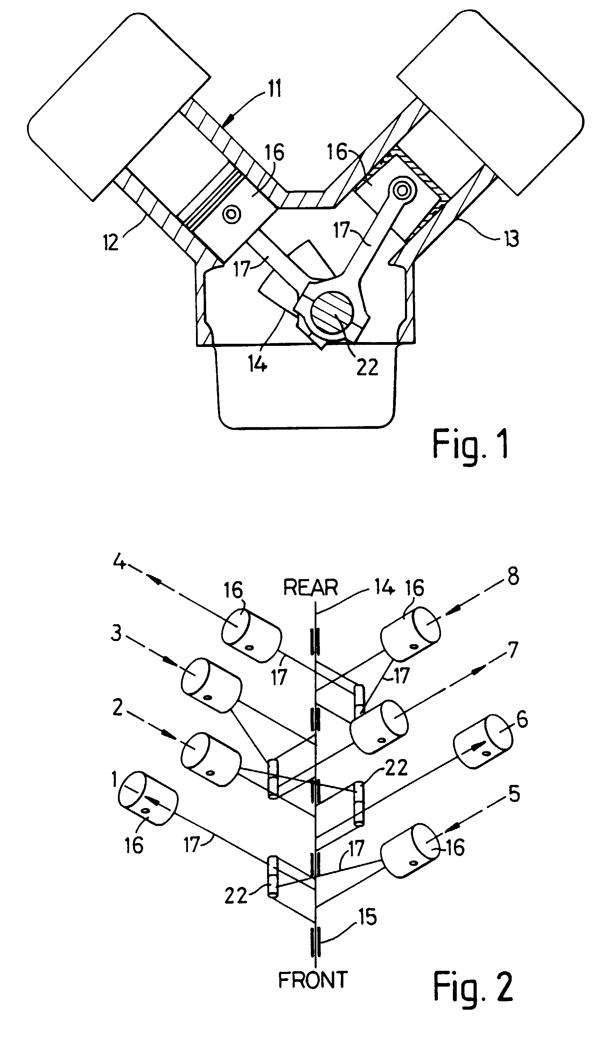

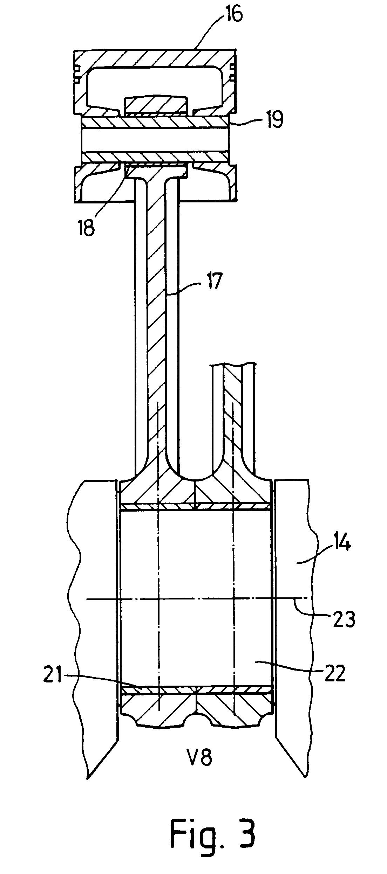

Figs 1 to 6 illustrate known V8 and V6 piston engine technology. Fig 1 shows an engine block 11 having one bank 12 of cylinders and another bank 13 of cylinders arranged in V formation. There are four cylinders in each bank of a V8 and three cylinders in each bank in a V6. Fig 2 shows the axes of the cylinders in one bank labelled 1 to 4 and the axes of the cylinders the other bank labelled 5 to 8.

The lower part of the engine block is usually referred to as the crankcase and provides journal bearings for a crankshaft 14. The journal bearings are shown diagrammatically in Fig 2 at 15. Pistons 16 are reciprocal in cylinder bores and are connected to the crankshaft by connecting rods 17, each having a small end bearing 18 at one end connected to the piston through a gudgeon pin 19 and a big end bearing 21 at the other end connected to a crankpin 22 which forms part of the crankshaft 14. The big end bearing 21 of the connecting rod 17 of each cylinder in the one bank 12 and the big end bearing of the connecting rod of each cylinder in the other bank 13 are journalled side by side on a respective crankpin 22 so that the crankpin is common to both.

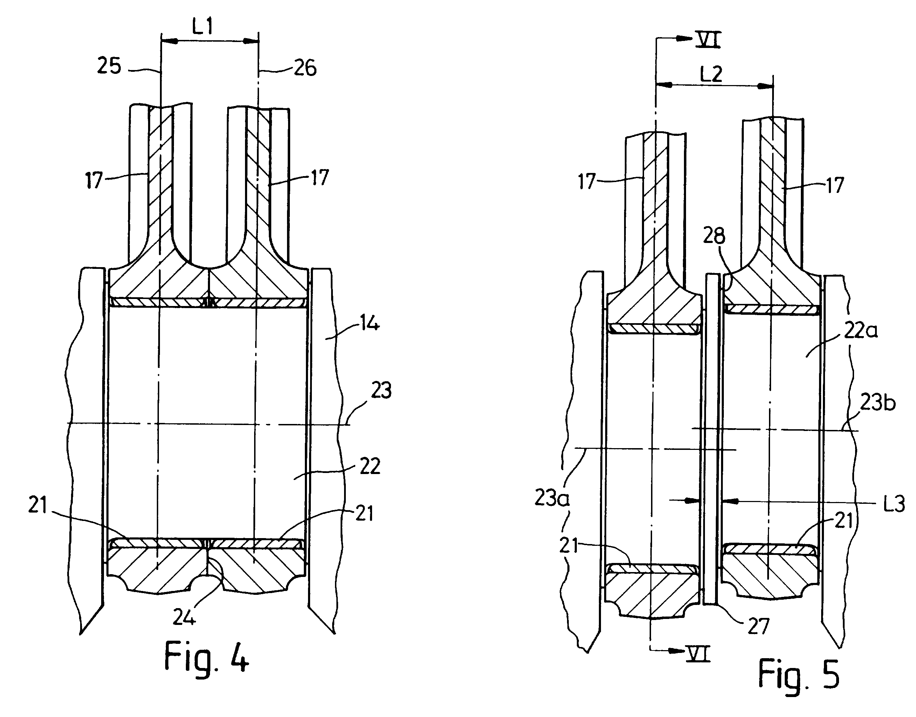

In the known V8 engine the crankpin 22 is formed with a uniform diameter and axis 23 and there is no substantial clearance between adjacent side faces 24 of the big end bearings 21. Each connecting rod 17 and its bearings 18 and 21 are arranged symmetrically central relative to the respective cylinder axis 25 and 26 (Fig 4). The cylinders, as illustrated by axes 25 and 26, are axially offset relative to the axis of crankshaft 14 by an amount L1 which, by virtue of the symmetry of the connecting rods, is equivalent to the axial distance between opposite side faces of one of the big end bearings 21.

The offset L1 is termed the bank offset to denote the amount by which one bank of cylinders is offset from the other.

In the known V6 engine the crankpin 22a has offset axes 23a and 23b. The cylindrical portions of the crankpin 22a defined by axes 23a and 23b are separated by an integral collar or web 27. Annular steps 28 on each side of the collar 27 provide axial location bearing faces for the connecting rods.

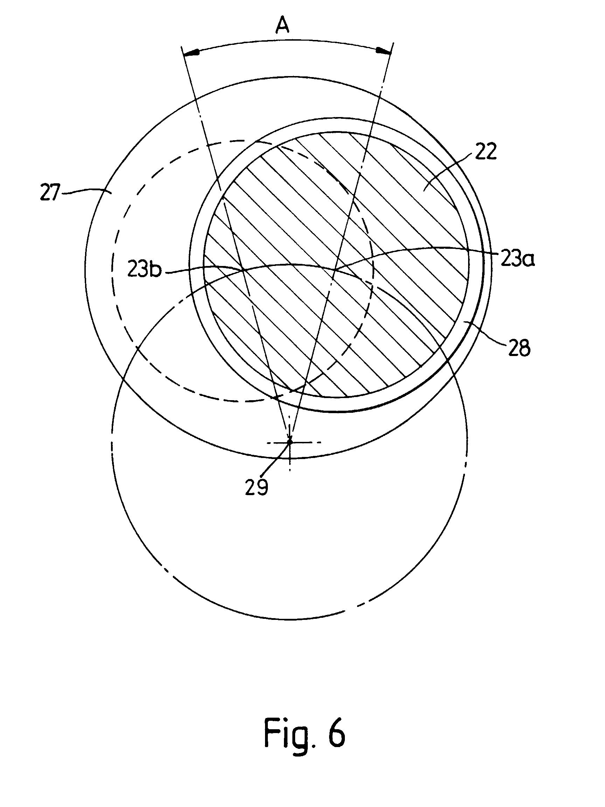

The crankpin axes 23a and 23b are offset by an amount which is equivalent to an angle A (Fig 6) between the crank throws, that is the lines between the crankshaft axis 29 and the crankpin axes 23a and 23b. This crankpin offset is required to give even firing intervals when the V6 engine retains the same 90 degrees between the bank angles as is used on the V8 engine. However, the presence of the collar 27, including the steps 28, means that the connecting rods 17 are spaced apart a distance L2 which is equivalent to L1 plus the axial width of the collar.

Since L2 is also the bank offset the V6 engine cannot be made on the same production facilities as the V8 engine if mass-production methods are to be exploited to the full. For example, it would be normal practice to machine all eight or all six cylinder bores simultaneously using multiple boring heads at fixed centres.

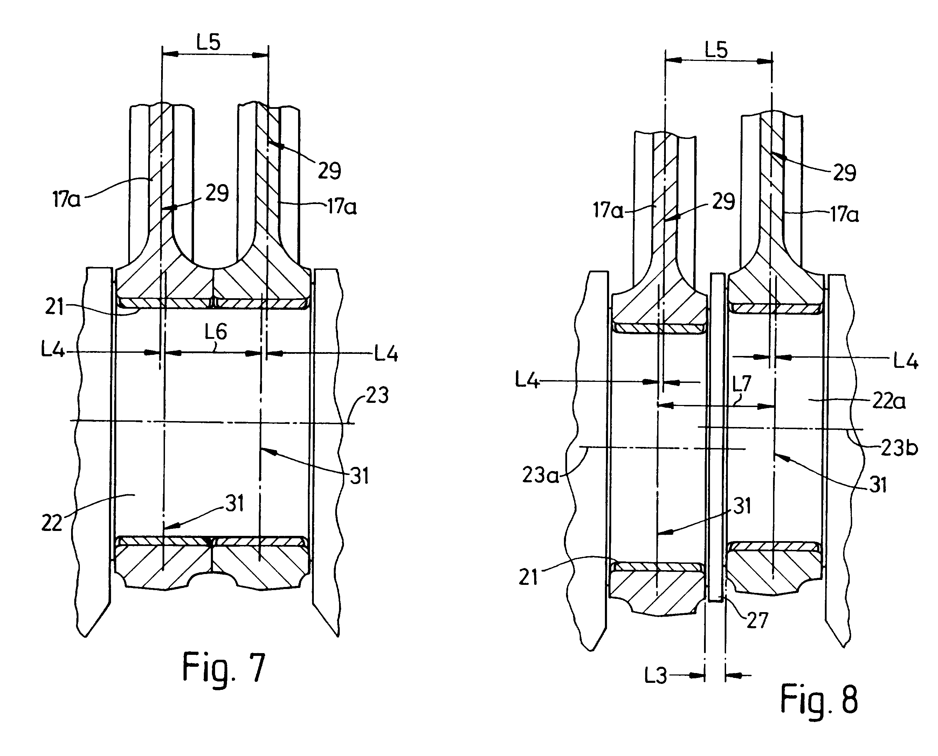

The invention of application no. 91306632.0 overcomes the problem by allowing both V6 and V8 types of engines to use a common bank offset, as will be described with further reference to Figs 7 and 8. The axis 29 of each cylinder is offset by a distance L4 relative to the crankshaft axis from the axial centre 31 of the respective big end bearing. This offset L4 is referred to as the connecting rod offset and is achieved in this example by having the small end bearing 18 of each connecting rod 17a arranged centrally about the axis 29 of the respective cylinder so that its axial centre is offset relative to the axial centre 31 of the big end bearing, this being known as an offset connecting rod.

If the connecting rod offset L4 is one quarter of the axial distance between opposite side faces of the big end bearings on a common crankpin of the V6 type engine, then the same connecting rod offset can be used for both the V6 and V8 type engines. This axial distance is the same as the axial width L3 of the collar 27 (Fig 5). It thus follows that the same connecting rods can be used for a family of engines which includes both the V6 and V8 types.

In the V8 engine (Fig 7) the connecting rod offsets L4 are arranged so that the bank offset L5 is greater than the distance between the axial centres 31 of the big end bearings 21 on the common crankpin 22 and in the V6 engine of the present invention (Fig 8) the connecting rod offsets L4 are arranged so that the bank offset L5 is less than the distance between the axial centres 31 of the respective big end bearings.

In an alternative series of engines according to application no.91306632.0 the V8 engine has no connecting rod offset whilst the V6 engine according to the present invention has its connecting rod offset doubled compared to that just described above.

An alternative to the offset connecting rod is a piston with gudgeon pin bosses arranged to give clearance to a small end bearing which is offset relative to the cylinder axis but central relative to the big end bearing. This may be achieved either by having one longer and one shorter boss or by having small and large side clearances between the small end bearing and the bosses.

## Claims

1. A piston engine having an engine block (11) comprising two banks (12, 13) of two or more cylinders arranged in V formation, a crankshaft (14) journalled in the engine block and having two or more crankpins (22a), pistons (16), each guided for reciprocal movement in a respective cylinder bore, and connecting rods (17a), each having a small end bearing (18) at one end connected to a respective piston and a big end bearing (21) at the other end, the big end bearing of the connecting rod of each cylinder in one bank and the big end bearing of the connecting rod of the opposite cylinder in the other bank being journalled side by side with axial separation of adjacent side faces of the respective big end bearings on a common crankpin formed with offset axes (23a, 23b), the axes (29) of the cylinders of one bank (12) being offset, relative to the crankshaft axis, from the axes of the cylinders of the other bank (13) by an amount called the bank offset (L5), the axis of each cylinder being offset relative to the crankshaft axis from the axial centre (31) of the respective big end bearing by an amount called the connecting rod offset (L4) and arranged so that the bank offset is less that the distance (L7) between the axial centres of the big end bearings on the respective crankpin.

2. An engine according to Claim 1 wherein the magnitude of the connecting rod offset (L4) is one quarter of the axial distance (L3) separating adjacent side faces of the big end bearings (21) on each crankpin (22a).

## Patentansprüche

1. Hubkolbenmotor, der einen Motorblock (11) mit zwei Reihen (12,13) von zwei oder mehr V-förmig angeordneten Zylindern, eine Kurbelwelle (14), die im Motorblock gelagert ist und zwei oder mehr Kurbelzapfen (22, 22a) aufweist, Kolben (16), jeweils zur wechselseitigen Bewegung in einer jeweiligen Zylinderbohrung geführt, und Pleuel (17a) umfaßt, die jeweils an einem Ende ein Pleuelaugenlager (18), das mit einem entsprechenden Kolben verbunden ist, und am anderen Ende ein Pleuelhauptlager (21) aufweisen, wobei das Pleuelhauptlager des Pleuels jedes Zylinders in einer Reihe und das Pleuelhauptlager des Pleuels des gegenüberliegenden Zylinders in der anderen Reihe nebeneinander mit axial beabstandeten Seitenflächen der jeweiligen Pleuelhauptlager auf einem gemeinsamen, mit versetzten Achsen (23a, 23b) gebildeten Kurbelzapfen gelagert sind, wobei die Achsen (29) der Zylinder einer Reihe (12) bezüglich der Kurbelwellenachse zu den Achsen der Zylinder der anderen Reihe (13) um ein als Reihenversatz (L5) bezeichnetes Maß versetzt sind, wobei die Achse jedes Zylinders bezüglich der Kurbelwellenachse zum axialen Mittelpunkt (31) des jeweiligen Pleuelhauptlagers um ein als Pleuelversatz (L4) bezeichnetes Maß versetzt ist und so angeordnet ist, daß der Reihenversatz geringer ist als der Abstand (L7) zwischen den axialen Mittelpunkten der Pleuelhauptlager auf jedem der jeweiligen Kurbelzapfen.

2. Motor nach Anspruch 1, bei dem die Größe des Pleuelversatzes (L4) ein Viertel des axialen Abstands (L3) zwischen benachbarten Seitenflächen der Pleuelhauptlager (21) auf jedem Kurbelzapfen (22a) beträgt.

## Revendications

1. Moteur à pistons ayant un bloc moteur (11) comprenant deux rangées (12, 13) de deux cylindres ou plus arrangés en V, un vilebrequin (14) tourillonné dans le bloc moteur et ayant deux tourillons de vilebrequin ou plus (22a), des pistons (16), chacun étant guidé de manière à avoir un mouvement alternatif dans un alésage de cylindre respectif, et des bielles (17a), chacune ayant un petit palier de bout (18) à une extrémité connectée à un piston respectif et un gros palier de bout (21) à l'autre extrémité, le gros palier de bout de la bielle de chaque cylindre dans une rangée et le gros palier de bout de la bielle du cylindre opposé dans l'autre rangée étant tourillonnés côte à côte avec une séparation axiale des faces latérales adjacentes des gros paliers de bout respectifs sur un tourillon de vilebrequin commun formé avec des axes décalés (23a, 23b), les axes (29) des cylindres d'une rangée (12) étant décalés, par rapport à l'axe du vilebrequin, des axes des cylindres de l'autre rangée (13) d'une distance appelée le décalage de rangées (L5), l'axe de chaque cylindre étant décalé, par rapport à l'axe du vilebrequin, du centre axial (31) du gros palier de bout respectif, d'une distance appelée le décalage des bielles (L4) et arrangé de telle sorte que le décalage des rangées soit inférieur à la distance (L7) entre les centres axiaux des gros paliers de bout sur le tourillon de vilebrequin respectif.

2. Moteur selon la revendication 1, dans lequel l'ampleur du décalage des bielles (L4) est d'un quart de la distance axiale (L3) séparant les faces latérales adjacentes des gros paliers de bout (21) sur chaque tourillon de vilebrequin (22a).
